(19) Europäisches Patentamt
European Patent Office
Office européen des brevets

(11) EP 1 881 435 A1

(12) DEMANDE DE BREVET EUROPEEN

(43) Date de publication:
23.01.2008 Bulletin 2008/04

(51) Int Cl.:
$G06F\ 21/00^{(2006.01)}$ $H04L\ 29/06^{(2006.01)}$

(21) Numéro de dépôt: 07301162.9

(22) Date de dépôt: 27.06.2007

(84) Etats contractants désignés:
AT BE BG CH CY CZ DE DK EE ES FI FR GB GR HU IE IS IT LI LT LU LV MC MT NL PL PT RO SE SI SK TR
Etats d'extension désignés:
AL BA HR MK YU

(30) Priorité: 18.07.2006 FR 0653021

(71) Demandeur: France Télécom
75015 Paris (FR)

(72) Inventeurs:
• Francfort, Stanislas
14210, EVRECY (FR)
• Butti, Laurent
92130, ISSY LES MOULINEAUX (FR)
• Veysset, Franck
92130, ISSY LES MOULINEAUX (FR)

(54) Procédé et dispositif de detection d'attaques de réseau par déterminer des correlations temporelles de données

(57) L'invention concerne un procédé de détection qu'au moins un équipement, communiquant avec un réseau de communication, envoie un grand nombre de trames sur ce réseau, ledit procédé comprenant une étape consistant à analyser une distribution des écarts temporels ($\Delta i$) entre des trames (Tri, Tri+1) envoyées sur le réseau, afin de déterminer si ladite distribution correspond à une distribution avec mémoire.

Fig. 1

EP 1 881 435 A1

# Description

La présente invention se rapporte au domaine des réseaux de communication et notamment à la détection qu'au moins un équipement envoie un grand nombre de trames. Plus particulièrement, l'invention permet de détecter des attaques de type déni de service par inondation effectué sur le réseau par des pirates informatiques.

L'attaque de type déni de service par inondation se caractérise, par exemple, par l'envoi d'un grand nombre de trames malformées ou non-conformes. Ceci peut perturber le fonctionnement de moyens qui sont destinés à reconnaître et à signaler, par des alertes, toutes sortes d'attaques effectuées sur le réseau. Ceci rend également l'exploitation de ces alertes plus difficile.

En effet, lorsqu'un utilisateur malveillant inonde le réseau de trames malformées ou non conformes, les moyens destinés à reconnaître et à signaler des attaques associent à chaque trame malformée ou non-conforme une alerte. Un grand nombre d'alertes est alors stocké dans une base de données, ce qui perturbe l'exploitation de cette information, par un administrateur en charge de la surveillance du réseau.

Pour soulager la base de données d'un trop grand nombre d'alertes, tout ou partie de celles-ci peuvent être regroupées. Le regroupement d'alertes s'effectue, lorsqu'un grand nombre de trames, supérieur à un certain seuil, est reçu par les moyens destinés à reconnaître et à signaler des attaques. On regroupe pour cela les alertes liées aux trames émises par le même équipement malveillant, notamment celles ayant une même adresse d'identification. En effet, l'adresse d'identification est normalement unique pour un équipement donné, celui-ci l'inscrivant dans les trames qu'il émet.

Or aujourd'hui il est possible de modifier l'adresse d'identification d'un équipement comme expliqué dans l'article "Detecting Wireless LAN MAC Address Spoofing" de J. Wright, (consultable à l'adresse http://home.jwu.edu/jwright/papers/wlanmac-spoof.pdf). C'est pourquoi lors d'une attaque de type déni de service par inondation, le regroupement des alertes ne pourra pas bien s'effectuer. En effet, le pirate modifiera l'adresse d'identification de son équipement, avant que le nombre de trames envoyées ne dépasse le seuil, au-delà duquel une seule alerte en représente plusieurs. Par conséquent l'exploitation des informations sera plus difficile, la base de données étant de nouveau inondée d'alertes.

Ainsi, la présente invention permet de palier ou pour le moins de réduire tout ou partie des inconvénients précités en détectant qu'un même équipement envoie un grand nombre de trames et plus particulièrement lorsque cet équipement envoie un grand nombre de trames en utilisant plusieurs adresses d'identification pour les émettre.

Un premier objet de la présente invention concerne un procédé de détection, qu'au moins un équipement envoie un grand nombre de trames, comprenant une étape d'analyse d'une distribution des écarts temporels ($\Delta i$) entre des trames (Tri, Tri+1) envoyées sur le réseau, afin de déterminer si ladite distribution correspond à une distribution avec mémoire.

Ainsi, la détection qu'un équipement envoie un grand nombre de trames est plus efficace. En effet, le lien temporel, existant entre les trames provenant d'un même équipement, est plus difficilement modifiable, comparé à une adresse d'identification.

Selon des modes de réalisation préférentiels non limitatifs, le procédé objet de l'invention présente les caractéristiques supplémentaires prises isolément ou en combinaison, énoncées ci-après:

Les écarts temporels correspondent à la différence de temps de réception entre des trames envoyées sur le réseau.

Ainsi, l'analyse se fait à partir de valeurs temporelles facilement déterminables.

Les écarts temporels correspondent à la différence d'étiquettes temporelles entre des trames envoyées sur le réseau.

On s'affranchit ainsi des décalages temporels pouvant se produire lorsque les trames traversent le milieu de transmission.

Selon un deuxième objet de l'invention, un dispositif de détection qu'au moins un équipement, communiquant avec un réseau de communication, envoie un grand nombre de trames comprend :

- des moyens destinés à recevoir des trames envoyées sur le réseau;
- des moyens destinés à analyser une distribution des écarts temporels ($\Delta i$) entre des trames (Tri, Tri+1) envoyées sur le réseau, afin de déterminer si ladite distribution correspond à une distribution avec mémoire.

Un troisième objet de l'invention concerne un programme d'ordinateur sur un support de données et chargeable dans la mémoire interne d'un ordinateur, comprenant des portions de code pour l'exécution des étapes d'un procédé de détection qu'au moins un équipement envoie un grand nombre de trames lorsque le programme est exécuté sur ledit ordinateur.

Selon un quatrième objet de l'invention, un composant programmable comportant un programme comprend des portions de code pour l'exécution des étapes d'un procédé de détection qu'au moins un équipement envoie un grand nombre de trames lorsque le composant exécute ledit programme.

Un cinquième objet de l'invention concerne un procédé de détection d'attaques dans un réseau de communication comprenant une étape d'analyse d'une distribution des écarts temporels ($\Delta i$) entre des trames (Tri, Tri+1) envoyées sur le réseau, afin de déterminer si ladite distribution correspond à une distribution avec mémoire. Un sixième objet de l'invention concerne un programme d'ordinateur sur un support de données et chargeable dans la mémoire interne d'un ordinateur, ledit programme comprenant des portions de code pour l'exécution des étapes d'un procédé de détection d'attaques dans un réseau de communication lorsque le programme est exécuté sur ledit ordinateur

L'invention sera mieux comprise et d'autres particularités et avantages apparaîtront à la lecture de la description, faîte à titre d'exemple, cette description faisant références aux dessins annexés représentant:

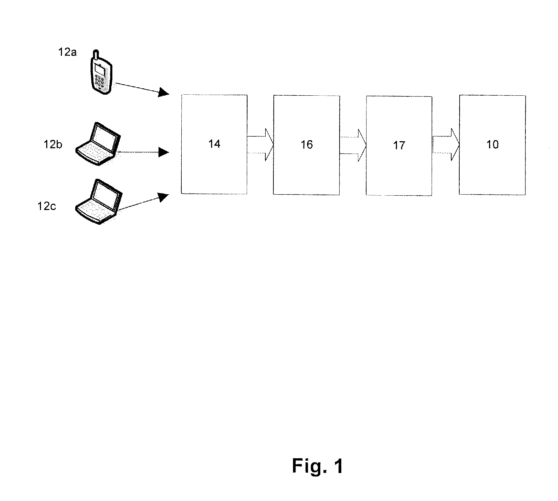

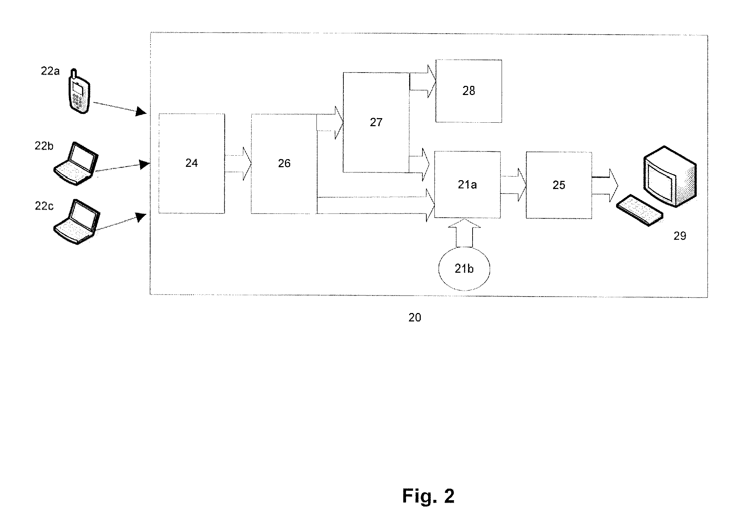

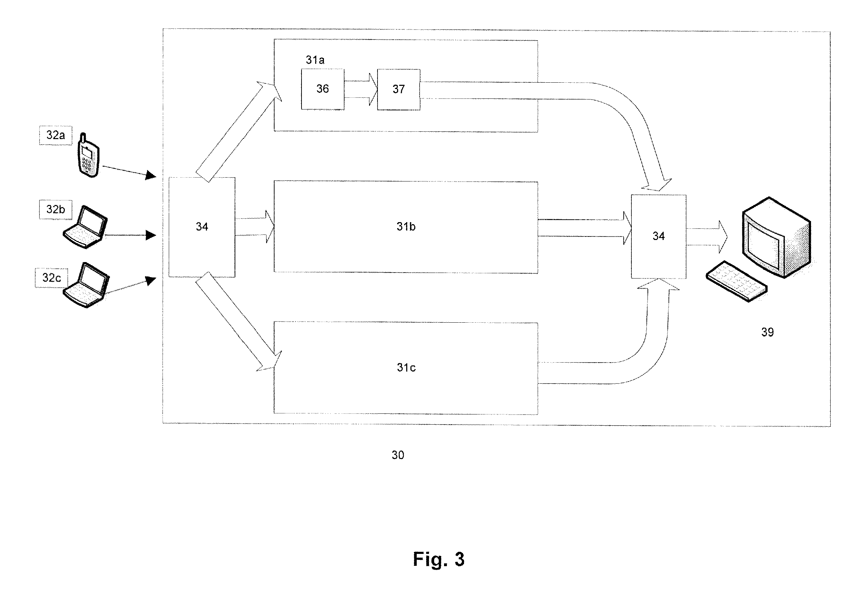

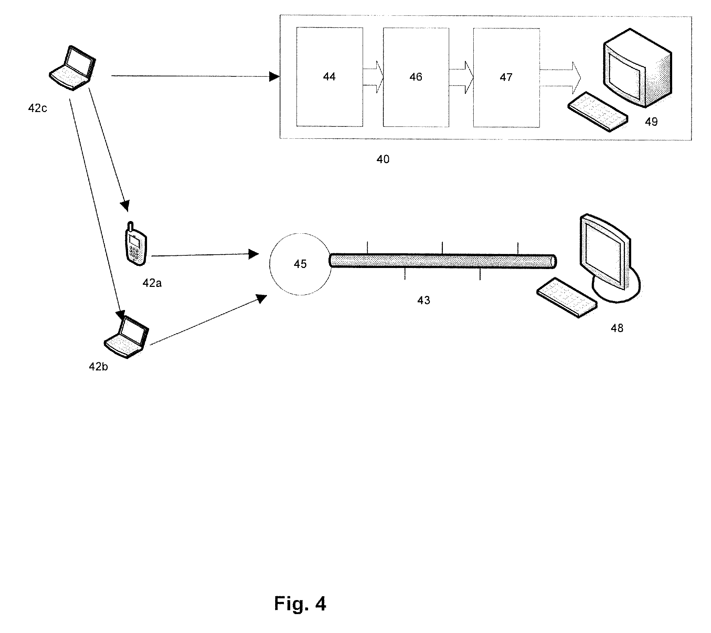

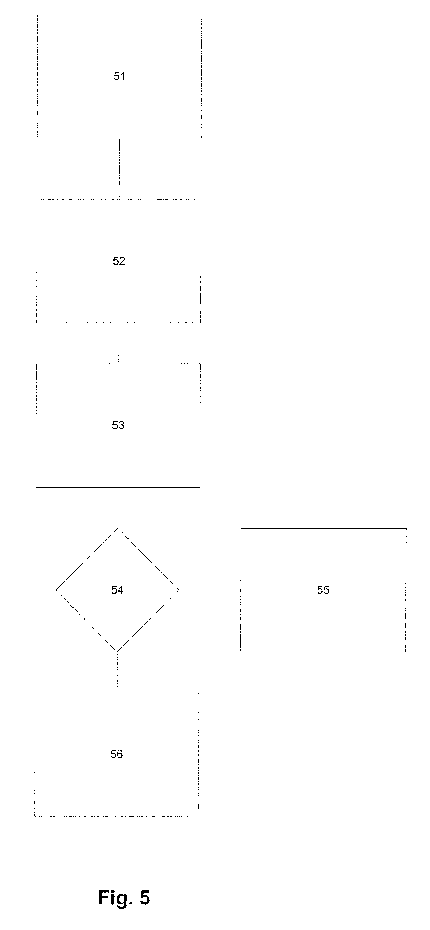

- A la Fig.1, un schéma d'un dispositif de détection qu'au moins un équipement envoie un grand nombre de trames selon l'invention;
- A la Fig.2, un premier mode de réalisation d'un dispositif de détection d'attaques selon l'invention;
- A la Fig.3, un second mode de réalisation d'un dispositif de détection d'attaques selon l'invention;
- A la Fig.4, un troisième mode de réalisation d'un dispositif de détection d'attaques selon l'invention;
- A la Fig.5, un organigramme d'un procédé mis en oeuvre par le dispositif selon l'invention;

L'invention est décrite ci-après dans une application particulière à la détection des attaques de type déni de service. Cette détection peut s'incorporer dans un dispositif de détection de tout ou partie des attaques réalisées sur un réseau de communication.

La Fig. 1 présente un schéma synoptique d'un dispositif de détection qu'au moins un équipement envoie un grand nombre de trames selon l'invention.

Des équipements 12a, 12b, 12c communiquent avec un réseau de communication. Les équipements peuvent être des ordinateurs fixes ou mobiles ou tout autre terminal communicant. Le réseau peut être de tout type. Il peut être ainsi un réseau filaire tel qu'Internet ou Ethernet. En variante, il peut être un réseau sans fil, tel qu'un réseau Wi-Max ou Wi-Fi. Ce type de réseau est d'ailleurs actuellement très utilisé dans les réseaux Hot-Spots, Entreprises et Résidentiels.

Les équipements 12a, 12b, 12c communiquent en envoyant des trames sur ce réseau. Par le terme "trame", on désigne ici un ensemble de données formant un bloc transmis dans un réseau et renfermant des données utiles et informations de service. Selon le contexte, une trame peut être qualifiée de paquets de données, de datagramme, de bloc de données, ou autre expression de ce type.

Les trames émises par les divers équipements 12a, 12b, 12c sont reçues au niveau de moyens 14 destinés à les recevoir. Ces moyens 14 sont par exemple au moins une sonde écoutant le réseau. Par écoute, on entend que la ou les sondes copient au moins une partie des trames émises sur le réseau dans un tableau ou tampon. En variante, les moyens 14 peuvent être un collecteur central relié à plusieurs sondes. Cette variante permet d'écouter un réseau, notamment un réseau sans fil, à différents endroits et de centraliser ensuite le traitement des trames. Les sondes peuvent être des structures indépendantes ou des logiciels faisant partie d'une autre structure. En outre, une sonde peut être répartie sur plusieurs structures.

Les trames écoutées sont ensuite envoyées à des moyens 16 de sélection des trames. Ces moyens 16 vont sélectionner au moins une partie des trames reçues, et les soumettre aux moyens 17 d'analyse d'une corrélation temporelle. Les moyens 17 ont ainsi pour fonction de déterminer s'il existe un lien temporel entre au moins une partie des trames reçues par les moyens 14. En effet, lors d'une attaque de type déni de service par inondation, un grand nombre de trames est émise par l'équipement contrôlé par le pirate informatique. Par grand nombre de trames, on entend un nombre supérieur à ce qu'émet un équipement bienveillant lorsqu'il communique normalement avec le réseau. Or lorsqu'un équipement envoie des trames, celles-ci sont liées temporellement entre elles pour des raisons physiques. En effet, les trames sont générées par une boucle séquentielle cadencée par l'horloge de base de l'équipement. Ainsi les trames sont envoyées périodiquement. Il existe donc un fort lien temporel entre ces trames et ceci même si les données envoyées n'ont aucun lien logique entre elles. En exploitant cette caractéristique, il est possible d'analyser la corrélation temporelle entre au moins une partie des trames reçues. On notera, que les trames émises par différents équipements n'ont pas de lien temporel entre elles, leur horloge de base n'étant pas synchronisée. Les moyens 17 d'analyse d'une corrélation peuvent être ainsi des structures propres ou des logiciels. En outre, les moyens 17 peuvent être combinés sur la même structure qu'au moins une sonde. Ils peuvent être également répartis sur plusieurs structures.

Les moyens 17 d'analyse d'une corrélation temporelle vont ensuite envoyer une information à des moyens 10 destinés à reconnaître et à signaler toute sorte d'attaques. Ces moyens 10 peuvent être, par exemple, des systèmes de détection des intrusions (IDS) ou des systèmes de prévention des intrusions (IPS). Un système de détection des intrusions (IDS) est un ensemble de composants logiciels et/ou matériels dont la fonction principale est de reconnaître et de signaler toute tentative d'effraction. Un système de prévention des intrusions (IPS) comprend de manière générale les fonctions d'un IDS auxquelles sont rajoutées des fonctions de prévention et de protection du réseau. L'information envoyée par les moyens 17 peut être une alerte signalant une attaque de type déni de service. En variante, l'information envoyée peut signaler qu'un échantillon particulier de trames analysées présente un caractère suspect. Elles peuvent ainsi potentiellement fonder une attaque de type déni de service par inondation.

Il va être décrit maintenant plus en détail, à l'aide de la Fig.5, un procédé de détection qu'au moins un équipement envoie un grand nombre de trames sur le réseau.

Lorsqu'un équipement, par exemple l'équipement 12a, envoie un grand nombre de trames, celles-ci sont écoutées à l'étape 51, par les moyens 14. Ces moyens 14 associent à chaque trame reçue Tr, Tr+1 un instant de réception ti, ti+1, par exemple un nombre en millisecondes. Les trames à analyser vont être ensuite sélectionnées à l'étape 52. Ces trames sont ensuite disponibles pour les moyens 17 d'analyse d'une corrélation temporelle à l'étape 53.

Une première méthode, pour déterminer l'existence d'un lien entre les trames, consiste à déterminer s'il existe une autocorrélation temporelle entre elles. On analyse pour cela l'instant de réception des trames sur une période donnée et une alerte est émise par les moyens 17. Cette alerte est émise lorsqu'il est déterminé qu'un profil, représentant plusieurs instants d'arrivée de trames, se répète.

Une seconde méthode consiste à analyser si une distribution de variables X, caractéristique des trames, est ou non une distribution sans mémoire, c'est-à-dire si l'instant d'arrivée d'une trame est liée à l'instant d'arrivée d'une précédente. Une distribution de variables X correspond à une distribution sans mémoire si et seulement si quelque soit "s" et "t" positifs, la probabilité que [X>t+s sachant X>t] est égale à la probabilité que [X>s]. Ceci revient à déterminer si la distribution des variables X est, par exemple, en adéquation avec le processus de Levy.

En variante, ceci revient à déterminer si la distribution des variables X est en adéquation avec la loi de poisson. Le procédé est ainsi robuste, car il autorise une certaine marge d'erreur dans l'analyse d'une corrélation temporelle entre les trames. Ainsi, même si les trames envoyées par les équipements subissent certains retards temporels ou même si certaines trames se perdent, l'analyse d'une corrélation temporelle entre les trames restera fiable. On notera que les retards temporels peuvent être dus au milieu physique constitutif du réseau.

Dans le cas où, les moyens 16 de sélection sélectionnent, à l'étape 52, toutes les trames reçues, la variable X peut être l'écart temporel $\Delta$i, entre l'instant d'arrivée des trames reçues par les moyens 14. Cet écart temporel $\Delta$i correspond ainsi à la différence de temps, ti et ti+1, entre deux trames, Tri et Tri+1, successivement reçues par les moyens 14.

Dans le cas où, les moyens 16 de sélection sélectionnent, à l'étape 52, une partie des trames reçues, la variable X peut être l'écart temporel $\Delta$i correspondant à la différence de temps, ti et ti+1, entre deux trames, Tri et Tri+1, successivement sélectionnées par les moyens 16 de sélections de trames.

La tâche des moyens 17 est alors d'analyser si la distribution temporelle des écarts temporels $\triangle$i entre les trames sélectionnées Tri, Tri+1 envoyées sur le réseau correspond ou non à une distribution avec mémoire. Ceci revient à déterminer si la distribution des $\triangle$i est en adéquation, par exemple, avec la loi de poisson.

Si l'on note D= {x1 ; x2 ; ... ; xn}, la distribution expérimentale des $\Delta$i, n étant le nombre de trames traitées par le corrélateur. A titre d'exemple n peut être de l'ordre de 10 000 trames. Les moyens 17 d'analyse d'une corrélation vont dans un premier temps classer l'échantillon D en classes d'équivalences Xj (j variant de 1 à k). Chaque classe d'équivalence correspond à un intervalle temporel de durée fixe, par exemple 1 milliseconde. A chaque classe Xj, on associe le nombre nj de xi égaux entre eux.

Par exemple, à partir d'un échantillon de taille n=10000 on a obtenu, pour les 11 valeurs entières d'une variable aléatoire X les effectifs suivants:

| X | nj |
|---|---|
| 0 | 166 |
| 1 | 895 |
| 2 | 1640 |
| 3 | 2058 |
| 4 | 1925 |
| 5 | 1478 |
| 6 | 946 |
| 7 | 301 |
| 8 | 296 |
| 9 | 198 |
| 10 | 97 |

Les moyens 17 d'analyse d'une corrélation analysent alors si la distribution de la variable aléatoire X suit une distribution avec ou sans mémoire. On peut utiliser pour cela la loi de poisson. On calcule ainsi la moyenne de l'échantillon.
Soit:

*L1 : = [0, 1, 2, 3, 4, 5, 6, 7, 8, 9, 10]*
*L2:= [166, 895, 1640, 2058, 1925, 1478, 946, 301, 296, 198, 97]*
*Mean (L1, L2)*

On obtient:
*38342/10000*

Les moyens 17 déterminent ensuite l'écart

$$E = \sum_{j=1}^{k0} \frac{(Xj - ej)^2}{ej} \, ,$$ ej correspondant à l'effectif théorique déterminé selon la formule:

$$ej = n * e^{-M} \frac{M^j}{j!} \, ,$$ j variant de 1 à k.

Ainsi dans notre exemple les effectifs théoriques sont:
*10000\*poisson (3.8342,0), 10000\*poisson(3.8342,1), etc...*

*10000\*poisson (3.8342,9), 10000\*poisson(3.8342, 10).*
Avec *poisson (3.8342,k)=exp(-3.8342)\*(3.8342^k)/k*!
On obtient la liste L des 11 valeurs ej pour j=0...10.
*[216.1862645522, 828.9013755462,*
*1589.0868270596, 2030.9589041040,*
*1946.7756575289, 1492.8654452194,*
*953.9907816767, 522.5416364436, 250.4411428065,*
*106.693492Z943, 40.9084187771]*

On change la valeur de la dernière classe afin
d'avoir toutes les valeurs non prises en compte par les
précédents ej (en effet, la somme des ej doit être égale
à 10000).
Donc on obtient la liste L des ej:
*[216.1862645522, 828.9013755462,*
*1589.0868270596, 2030.9589041040,*
*1946.7756575289, 1492.8654452194,*
*953.9907816767, 522.5416364436, 250.4411428065,*
*106.6934921943, 61.55847286854987*]

Le corrélateur regroupe ensuite les ej en faisant
la somme des ej voisins, afin qu'il ne reste que des classes de valeur supérieure ou égale à 10000\*S. S correspond au seuil de rejet de l'adéquation de la distribution
observée par rapport à une loi de poisson (par exemple
S=0.01 ou S=0.05).
On obtient ainsi la liste L des effectifs théoriques ej avec
ej>500 par exemple:
[1045.087640098437, *1589.0868270596,*
*2030.9589041040, 1946.7756575289,*
*1492.8654452194, 953.9907816767,*
941.2347443128931]

Le corrélateur regroupe de la même façon les
Xj en additionnant les valeurs pour lesquelles les ej ont
été additionnés, j variant maintenant de 1 à k0 pour les
Xj, comme pour les ej. La liste L2 d'effectifs empiriques
correspondant à ces 7 classes est:
L2:= [1061, 1640, 2058, 1925, 1478, 946, 892]

Il est maintenant possible au corrélateur de calculer l'écart E selon la formule, on obtient alors
E=5.26747031564484.

A l'étape 54, le corrélateur compare l'écart E
avec un paramètre h, h vérifiant :

$$\text{Proba}\left( \chi^2_{k-2} < h \right) = 1 - S$$

Pour déterminer h, on utilise des tables donnant
h en fonction du degré de liberté (ici 7-2=5) et du paramètre S. Dans notre exemple, on trouve h= 11.07.
L'étape 55 correspond à notre exemple où E<h, la distribution est donc une distribution sans mémoire et il est
estimé qu'il n'y a pas d'attaque de type déni de service
par inondation. L'étape 56 correspond au cas contraire
où E>h, la distribution est alors une distribution avec mémoire et il est estimé qu'il y a une attaque potentielle.
On notera, que le dispositif de détection qu'au moins un
équipement envoie un grand nombre de trames fonctionne, même si un ou plusieurs équipements effectuent une
attaque de type déni de service par inondation, et même
si un ou plusieurs équipements bienveillants communiquent avec le réseau.

La Fig.2 présente un exemple, dans lequel le
dispositif de détection qu'au moins un équipement envoie
un grand nombre de trames, est inclus dans un dispositif
plus global de détection d'attaques 20.
Le terme "attaque" englobe ici tous les types d'attaque
possibles sur un réseau à savoir les attaques passives
(par exemple récupération du contenu d'un message,
analyse de trafic etc.) et les attaques actives (par exemple mascarade, déni de service etc.).
Des équipements 22a, 22b, 22C émettent des trames
sur le réseau. Celles-ci sont réceptionnées par des
moyens 24 destinés à recevoir des trames. Les trames
sont ensuite sélectionnées par des moyens 26 qui vont
fournir les trames à analyser aux moyens 27 d'analyse
d'une corrélation. La sélection peut englober toutes les
trames reçues. La sélection peut également ne retenir
que les trames ayant une nouvelle adresse d'identification. L'adresse d'identification peut être, par exemple,
une adresse MAC ("Medium Access Control"), ou une
adresse IP ("Internet Protocol"). En sélectionnant les trames ayant ainsi une nouvelle adresse d'identification, les
moyens 27 pourront éventuellement détecter une périodicité dans la modification de ces adresses d'identification. En effet, la modification des adresses est particulièrement dépendante de l'horloge de base de l'équipement émetteur pirate. En variante, la sélection peut concerner un type de trame particulier comme des trames
BEACON, des trames d'authentification, ou tout autre
type de trame bien identifiée, susceptible d'être envoyée
en nombre par un pirate informatique.
Si la distribution des écarts temporels △i apparaît suspecte aux moyens 27, les trames associées à ces écarts
temporels seront dirigées vers un moyen 28 de traitement annexe. Si la distribution des écarts temporels apparaît non suspecte, les trames associées seront dirigés
vers des moyens 21a, 21b destinés à reconnaître et à
signaler toute sorte d'attaques. Ces moyens peuvent recevoir également les trames non sélectionnées par les
moyens 26. Ces moyens comprennent des moyens de
comparaison 21a et des bases de connaissance 21b.
Les bases incluent tout ou partie des signatures d'attaques possibles sur un réseau de communication. Ainsi
en analysant les bits, présents dans les trames provenant
des moyens 26 et 27, les moyens de comparaison 21a
sont capables, par comparaison avec les bases de connaissance 21b, de signaler les trames comprenant des
parties suspectes.
A chaque trame suspecte est alors associée une alerte
qui sera stockée dans un journal d'évènements 25. Le
journal d'évènement 25 est ensuite exploité par un administrateur en charge de la sécurité du réseau. Cet administrateur peut être un humain analysant les alertes
via un moniteur 29 ou "Graphical User Interface". En variante, le journal d'évènement 25 peut être également
exploité automatiquement sans intervention humaine.

L'administrateur est ainsi capable de suivre, dans le temps, les attaques se déroulant sur le réseau.

Les moyens 26, 27 agissent ainsi comme un filtre. Ils évitent que des alertes ne soient émises sur des trames suspectes participant potentiellement à une attaque de type déni de service par inondation. L'exploitation du journal d'évènements par un administrateur, notamment un être humain, est ainsi plus efficace, le moniteur 29 étant moins surchargé d'alertes. En outre, grâce à l'invention, une attaque critique, noyée dans le bruit créé par le surnombre de trames, sera plus facilement détectable. Un dispositif de détection d'attaques 20 peut comprendre ainsi l'ensemble des moyens 24, 26, 27, 28, 21a, 21b, 25, 29.

La Fig.3 présente un dispositif de détection qu'au moins un équipement envoie un grand nombre de trames inclus dans un dispositif plus global de détection d'attaques 30. Cet exemple diffère notamment du précédent en ce que les moyens 37 d'analyse d'une corrélation temporelle font partie d'un moteur de recherche d'attaques 31a appartenant au dispositif 30. Ce dispositif 30 comprend d'autres moteurs de recherche d'attaques 31b, 31c travaillant en parallèle sur les trames reçues par les moyens 34. Chaque moteur envoie des alertes à un journal d'évènements 35 exploité par un administrateur via par exemple un moniteur 39. Le moteur 31a enverra ainsi une alerte dans le cas où il détecte une attaque de type déni de service par inondation. Un dispositif de détection d'attaques 30 peut comprendre ainsi l'ensemble des moyens 34, 31a, 31b, 31c, 34, 39.

La Fig.4 présente un dispositif de détection qu'au moins un équipement envoie un grand nombre de trames inclus dans un dispositif plus global de détection d'attaques 40. Dans cet exemple, un équipement 42c d'un pirate informatique usurpe l'adresse d'identification d'un point d'accès 45, communiquant avec différents équipements légitimes 42a, 42b. L'équipement 42c peut effectuer une attaque de type déni de service en envoyant en "broadcast", c'est-à-dire à l'ensemble des équipements 42a, 42b, certaines trames, par exemple des trames de désauthentification ou de désassociation. On trouve notamment ces trames dans les réseaux sans fil. Les équipements 42a, 42b vont alors se déconnecter du point d'accès 45, et donc se priver de service, croyant que la demande provient de ce point 45. On notera que le point d'accès 45 est, par exemple, relié à un réseau filaire 43 supervisé par un serveur 48.

Les pirates informatiques agissent ici directement sur les équipements légitimes. L'envoi massif de trames de désauthentification ou de désassociation empêchent ainsi leur reconnexion au point d'accès 45.

Un dispositif 40 va détecter cette attaque. Il dispose pour cela de moyens 46 qui vont sélectionner au moins une partie des trames reçues par les moyens 44. Les moyens 46 vont par exemple sélectionner les trames de désauthentification. Si les moyens 47 détectent une corrélation entre les trames sélectionnées, ils vont alors envoyer une alerte à un journal d'évènements. Ce journal sera ensuite analysé par un administrateur réseau via par exemple un moniteur 49. L'administrateur pourra contrer l'attaque en essayant, par exemple, de localiser et de neutraliser physiquement l'équipement malveillant. L'administrateur pourra également prévenir les équipements 42a, 42b de ne plus écouter les trames envoyées en "broadcast".

L'invention est ainsi particulièrement adaptée aux réseaux sans fil. Ces réseaux sont en effet soumis à de nombreuses attaques par des pirates informatiques. Certaines trames émises sur ce réseau comportent une étiquette temporelle. Cette caractéristique est avantageuse. En effet, l'étiquette temporelle d'une trame comprend une information temporelle relative à l'émission de cette trame. Cette information temporelle est constituée ici de la valeur de l'horloge de base de l'équipement émetteur ayant émis la trame à l'instant d'émission de cette trame. L'écart temporel △i peut être ainsi l'écart entre les étiquettes temporelles appartenant à au moins une partie des trames, Tri et Tri+1, reçues par les moyens 44. On s'affranchit ainsi des décalages temporels pouvant se produire lorsque les trames traversent le milieu de transmission. Les trames comportant de telles étiquettes temporelles sont pas exemple les trames BEACON ou PROBE RESPONSE.

L'exécution des étapes du procédé de détection qu'au moins un équipement envoie un grand nombre de trames et plus globalement l'exécution des étapes du procédé de détection d'attaque peut se faire à l'aide d'un programme chargé sur un ordinateur.

En variante, l'exécution des étapes du procédé de détection qu'au moins un équipement envoie un grand nombre de trames et plus globalement l'exécution des étapes du procédé de détection d'attaques peut se faire à l'aide d'un programme chargé sur un composant programmable.

Le procédé de détection qu'au moins un équipement, envoie un grand nombre de trames sur un réseau a été décrit dans son application particulière à la détection d'attaques, et plus particulièrement à la détection d'attaques de type déni de service par inondation.

Ce procédé peut être utilisé pour d'autres applications que la détection d'attaques et peut être utilisé pour toutes applications nécessitant de déterminer qu'un même équipement envoie un grand nombre de trames.

## Revendications

1.　Procédé de détection qu'au moins un équipement, communiquant avec un réseau de communication, envoie un grand nombre de trames sur ce réseau **caractérisé en ce qu'**une étape dudit procédé consiste à analyser une distribution des écarts temporels (△i) entre des trames (Tri, Tri+1) envoyées sur le réseau, afin de déterminer si ladite distribution correspond à une distribution avec mémoire.

**2.** Procédé de détection selon la revendication 1 **caractérisé en ce que** les écarts temporels ($\Delta i$) correspondent à la différence de temps de réception (ti, ti+1) entre des trames (Tri, Tri+1) envoyées sur le réseau.

**3.** Procédé de détection selon la revendication 1 **caractérisé en ce que** les écarts temporels ($\Delta i$) correspondent à la différence d'étiquettes temporelles entre des trames (Tri, Tri+1) envoyées sur le réseau.

**4.** Dispositif de détection qu'au moins un équipement, communiquant avec un réseau de communication, envoie un grand nombre de trames pour la mise en oeuvre du procédé selon les revendications 1 à 3 comprenant:

> - des moyens (14, 24, 34, 44) destinés à recevoir des trames envoyées sur le réseau;
> - des moyens (17, 27, 37, 47) destinés à analyser une distribution des écarts temporels ($\Delta i$) entre des trames (Tri, Tri+1) envoyées sur le réseau, afin de déterminer si ladite distribution correspond à une distribution avec mémoire.

**5.** Programme d'ordinateur sur un support de données et chargeable dans la mémoire interne d'un ordinateur, le programme comprenant des portions de code pour l'exécution des étapes du procédé selon les revendications 1 à 3 lorsque le programme est exécuté sur ledit ordinateur.

**6.** Composant programmable comportant un programme comprenant des portions de code pour l'exécution des étapes du procédé selon les revendications 1 à 3 lorsque le composant exécute ledit programme.

**7.** Procédé de détection d'attaques dans un réseau de communication **caractérisé en ce qu'**une étape dudit procédé consiste à analyser une distribution des écarts temporels ($\Delta i$) entre des trames (Tri, Tri+1) envoyées sur le réseau, afin de déterminer si ladite distribution correspond à une distribution avec mémoire.

**8.** Programme d'ordinateur sur un support de données et chargeable dans la mémoire interne d'un ordinateur, le programme comprenant des portions de code pour l'exécution des étapes d'un procédé selon la revendication 7 lorsque le programme est exécuté sur ledit ordinateur.

EP 1 881 435 A1

12a

12b

12c

14

16

17

10

**Fig. 1**

Fig. 2

**Fig. 3**

Fig. 4

**Fig. 5**

EP 1 881 435 A1

**Office européen des brevets**

# RAPPORT DE RECHERCHE EUROPEENNE

Numéro de la demande

EP 07 30 1162

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2004/056063 A (CETACEA NETWORKS CORP [CA]; MACISAAC GARY LORNE [CA]) 1 juillet 2004 (2004-07-01) * page 20, ligne 1 - page 21, ligne 10 * * page 22, ligne 1 - page 23, ligne 3 * * page 26, ligne 22 - page 27, ligne 10 * * figures 3-8 * | 1-8 | INV. G06F21/00 H04L29/06 |
| X | WO 2006/035140 A (FRANCE TELECOM [FR]; BUTTI LAURENT [FR]; DUFFAU ROLAND [FR]; VEYSSET F) 6 avril 2006 (2006-04-06) * abrégé * * page 8, ligne 3 - page 12, ligne 7 * * page 14, ligne 30 - page 15, ligne 14 * * figures 1,2 * | 1-8 | |
| X | PIN REN ET AL: "IDGraphs: Intrusion Detection and Analysis Using Histographs" VISUALIZATION FOR COMPUTER SECURITY, 2005. (VIZSEC 05). IEEE WORKSHOP ON MINNEAPOLIS, MN, USA OCT. 26, 2005, PISCATAWAY, NJ, USA,IEEE, 26 octobre 2005 (2005-10-26), pages 39-46, XP010852595 ISBN: 0-7803-9477-1 sections 4.1 and 4.3 * figures 2,8,9 * | 1-8 | |
| A | OWEZARSKI P: "On the Impact of DoS Attacks on Internet Traffic Characteristics and QoS" COMPUTER COMMUNICATIONS AND NETWORKS, 2005. ICCCN 2005. PROCEEDINGS. 14TH INTERNATIONAL CONFERENCE ON SAN DIEGO, CA, USA 17-19 OCT. 2005, PISCATAWAY, NJ, USA,IEEE, 17 octobre 2005 (2005-10-17), pages 269-274, XP010846070 ISBN: 0-7803-9428-3 section III * figures 2,3 * | 1-8 | |

DOMAINES TECHNIQUES RECHERCHES (IPC)

G06F
H04L

Le présent rapport a été établi pour toutes les revendications

| Lieu de la recherche | Date d'achèvement de la recherche | Examinateur |
|---|---|---|
| Munich | 18 octobre 2007 | Bengi, Kemal |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

13

**ANNEXE AU RAPPORT DE RECHERCHE EUROPEENNE
RELATIF A LA DEMANDE DE BREVET EUROPEEN NO.**

EP 07 30 1162

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-10-2007

| Document brevet cité au rapport de recherche | | Date de publication | Membre(s) de la famille de brevet(s) | | Date de publication |
|---|---|---|---|---|---|
| WO 2004056063 | A | 01-07-2004 | CA<br>EP<br>JP<br>KR | 2499938 A1<br>1573999 A1<br>2006510277 T<br>20050085604 A | 01-07-2004<br>14-09-2005<br>23-03-2006<br>29-08-2005 |
| WO 2006035140 | A | 06-04-2006 | EP | 1794934 A1 | 13-06-2007 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. WRIGHT.** *Detecting Wireless LAN MAC Address Spoofing, home.jwu.edu/jwright/papers/wlan-mac-spoof.pdf*